# EUROPEAN PATENT SPECIFICATION

(11) **EP 2 451 277 B1**
(45) Date of publication and mention of the grant of the patent: **18.12.2013**
(21) Application number: 10729811.9
(22) Date of filing: 29.06.2010
(51) Int. Cl.: A01N 43/56, A01P 21/00

(54) **PROCESS FOR IMPROVING SEEDLING GROWTH AND/OR EARLY EMERGENCE OF CROPS**
VERFAHREN FÜR ERHÖHTES WACHSTUM VON SETZLINGEN UND/ODER FRÜHES AUFGEHEN VON SAAT
PROCESSUS D'AMÉLIORATION DE LA CROISSANCE DE SEMIS ET/OU LEVÉE PRÉCOCE DE CULTURES

(30) Priority: 07.07.2009 EP 09164800
(43) Date of publication of application: 16.05.2012
(73) Proprietor: Bayer CropScience AG, 40789 Monheim (DE)
(72) Inventor: SUTY-HEINZE , Anne, 40764 Langenfeld (DE)
(86) International application number: PCT/EP2010/003934
(87) International publication number: WO 2011/003533

(56) References cited:
- WO-A-2005/018324
- WO-A-2006/015866
- US-A1- 2008 139 389
- US-A1- 2009 105 311

## Description

The present invention relates to the use of a penflufen for increasing the seedling growth and/or the early emergence of crops. Furthermore, the present invention relates to a process for improving the seedling growth and/or the early emergence of crops.

Ever since useful plants were first cultivated, increasing the crop yield has, in addition to improving resistance to abiotic and biotic stress, been the most important aim when growing plants. Means as diverse as tilling, fertilizing, irrigation, cultivation or crop protection agents, to name but a few, are used for improving yields. Thus, cultivation successes in increasing the crop, for example by increasing the seed setting, and those in reducing the loss of crop, for example owing to bad weather, i.e. weather which is too dry, too wet, too hot or too cold, or due to infestation with pests such as, for example, insects, fungi or bacteria, complement one another. In view of the rapidly growing world population, a substantial increase in yield, without extending the economically arable areas, is absolutely necessary in order to provide sufficient food and, at the same time, protect other existing natural spaces.

One means for the improvement of plant growth is the application of organic fertilizers which has been known and carried out for centuries (H. Marschner, "Mineral Nutrition of Higher Plants," Academic Press: New York pg. 674 (1986)). Modem man has developed a complex inorganic fertilizer production system to produce an easy product that growers and farmers can apply to soils or growing crops to improve performance by way of growth enhancement. Plant size, coloration, maturation, and yield may all be improved by the application of fertilizer products. Inorganic fertilizers include such commonly applied chemicals as ammonium nitrate. Organic fertilizers may include animal manures and composted lawn debris, among many other sources. However, the application of fertilizers for improving the plant growth is not suitable in some cases and leads to insufficient results.

One further strategy resulting in better or more rapid plant growth is to increase the photosynthetic capability of plants (US 6,239,332 and DE 19940270). This approach, however, is promising only if the photosynthetic performance of said plants is growth-limiting. Another approach is to modulate regulation of plant growth by influencing cell cycle control (WO 01/31041 A, CA 2263067, WO 00/56905 A, WO 00/37645 A). However, a change in the plant's architecture may be the undesired side effect of a massive intervention in the control of plant growth (WO 01/31041 A; CA 2263067). Other approaches may involve putative transcriptional regulators as for example claimed in WO 02/079403 A or US 2003/013228 A. Such transcriptional regulators often occur in gene families, in which the family members might display significant cross talk and/or antagonistic control. In addition the function of transcription factors rely on the precise presence of their recognition sequences in the target organisms. This fact might com plicate the transfer of result from model species to target organisms.

WO 2005/018324 describes a method of plant growth promotion by using specific carboxamides.

WO 2008/148482 and WO°2008/148476 both generally teach a positive effect of penflufen on the growth of crops. However, a particular effect on the emergence or seedling growth of soybean crops is not taught by the references.

The time at which a seedling emerges can determine its future success as a plant. Early emergence means plants begin to develop faster which gives growers a chance for higher yields.

An increased early emergence means on the one hand a faster emergence time (the time it takes for seeds to rise above the surface of the soil) and on the other hand a higher emergence rate (the number of seeds that make it to the surface), and preferably a better growth

Despite these approaches described in the prior art, there is nevertheless still a great need of providing methods for increasing the seedling growth and/or the early emergence of crops.

Thus, the object of the present invention is to provide a method for increasing the seedling growth and/or the early emergence of crops, in particular of soybean crops. According to the invention it is preferred
(a) to reduce emergence time (the time it takes for seeds to rise above the surface of the soil);
(b) to increase the emergence rate (the number of seeds that make it to the surface); and
(c) to increase growth of the seedling.

This object is solved by the use of a compound of the formula (I)

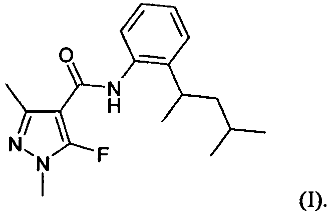

i.e. N-{2-(1,3-dimethylbutyl)anilino}-1,3-dimethyl-5-fluor-4-pyrazol (hereinafter "penflufen") for increasing the seedling growth and/or the early emergence of crops.

According to the present invention, it has been found out that it is possible to improve the emergence of crops, in particular of soybean crops, by applying penflufen to the seeds of the crop.

Penflufen is known from WO 2006/092291 A2. This prior art reference also describes a method for producing this pyrazol compound.

Penflufen is known to have fungicide activity. However, it is not known from prior art yet, that this compound also possesses the ability to enhance the seedling growth of crops and in particular enhance the early emergence of plants with (a) reduced emergence time; (b) increased the emergence rate and (c) increased growth of the seedling compared to the case without application of the compound. Thus the claimed seedling growth and/or the early emergence promoting activity of penflufen is surprising.

In the meaning of the present invention, the improvement of the growth of plants means that early emergence and seedlings growth of different plants occurs earlier. As a result, growth duration of seedlings is shortened and photosynthetic activity begins earlier.

Thus, penflufen is significantly advantageous and useful for both fungicidal plant diseases control and productivity involving shortened growth period of sensitive seedlings and earlier crop establishment in particular in soybean crops.

For achieving the effect underlying the present invention penflufen is applied to the seeds of the crops, in particular to soybean seeds.

It is preferred that the application quantity of penflufen applied to the seed of the crops is from 0.1 g to 1000 g active ingredient/100 kg seed, more preferably from 0,5 g to 500 g active ingredient/100 kg, most preferably of from 1 g to 300 g active ingredient/100 kg.

Penflufen can be used in combination with at least one further fungicide.

In one embodiment of the present invention, this further fungicide is selected from the group consisting of
(B1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid.
(B2) Inhibitors of the mitosis and cell division, for example benomyl, carbendazim, chlorfenazole, diethofencarb, ethaboxam, fuberidazole, pencycuron, thiabendazole, thiophanate, thiophanate-methyl and zoxamide.
(B3) Inhibitors of the respiration, for example diflumetorim as CI-respiration inhibitor; bixafen, boscalid, carboxin, fenfuram, flutolanil, fluopyram, furametpyr, furmecyclox, isopyrazam (mixture of syn-epimeric racemate 1RS,4SR,9RS and anti-epimeric racemate 1RS,4SR,9SR), isopyrazam (syn epimeric racemate 1RS,4SR,9RS), isopyrazam (syn-epimeric enantiomer 1R,4S,9R), isopyrazam (syn-epimeric enantiomer 1S,4R,9S), isopyrazam (anti-epimeric racemate 1RS,4SR,9SR), isopyrazam (anti-epimeric enantiomer 1R,4S,9S), isopyrazam (anti-epimeric enantiomer 1S,4R,9R), mepronil, oxycarboxin, penflufen, penthiopyrad, sedaxane, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyraoxystrobin, pyrametostrobin, pyribencarb, trifloxystrobin as CIII-respiration inhibitor.
(B4) Compounds capable to act as an uncoupler, like for example binapacryl, dinocap, fluazinam and meptyldinocap.
(B5) Inhibitors of the ATP production, for example fentin acetate, fentin chloride, fentin hydroxide, and silthiofam.
(B6) Inhibitors of the amino acid and/or protein biosynthesis, for example andoprim, blasticidin-S, cyprodinil, kasugamycin, kasugamycin hydrochloride hydrate, mepanipyrim and pyrimethanil.
(B7) Inhibitors of the signal transduction, for example fenpiclonil, fludioxonil and quinoxyfen.
(B8) Inhibitors of the lipid and membrane synthesis, for example biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl and vinclozolin.
(B9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole.
(B10) Inhibitors of the cell wall synthesis, for example benthiavalicarb, dimethomorph, flumorph, iprovalicarb, mandipropamid, polyoxins, polyoxorim, prothiocarb, validamycin A, and valifenalate.
(B11) Inhibitors of the melanine biosynthesis, for example carpropamid, diclocymet, fenoxanil, phthalide, pyroquilon and tricyclazole.
(B12) Compounds capable to induce a host defence, like for example acibenzolar-S-methyl, probenazole, and tiadinil.
(B13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram.
(B14) Further compounds like for example 2,3-dibutyl-6-chlorothieno[2,3-d]pyrimidin-4(3H)-one, ethyl (2Z)-3-amino-2-cyano-3-phenylprop-2-enoate, N-[2-(1,3-dimethylbutyl)phenyl]-5-fluoro-1,3-dimethyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoromethyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}phenyl)-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}imino)methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-{1-[(4-methoxyphenoxy)methyl]-2,2-dimethylpropyl}1H-imidazole-1-carbothioate, N-[2-(4-{[3-(4-chlorophenyl)prop-2-yn-1-yl]oxy}-3-methoxyphenyl)ethyl]-N²-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoroethoxy)phenyl]-3-(trifluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), tebufloquin, 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, ametoctradin, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-chloro-2-methoxy-4-methylpyridin-3-yl)(2,3,4-trimethoxy-6-methylphenyl)methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(Z)-[(cyclopropylmethoxy)imino][6-(difluoromethoxy)-2,3-difluorophenyl]methyl}-2-phenylacetamide, N-{(E)-[(cyclopropylmethoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide, zarilamid, N-methyl-2-(1-{[5-methyl-3-(trifluoromethyl)-1H-pyrazol-1-yl]acetyl}piperidin-4-yl)-N-[(1R)-1,2,3,4-tetrahydronaphthalen-1-yl]-1,3-thiazole-4-carboxamide, N-methyl-2-(1-{[5-methyl-3-(trifluoromethyl)-1H-pyrazol-1-yl]acetyl}piperidin-4-yl)-N-(1,2,3,4-tetrahydronaphthalen-1-yl)-1,3-thiazole-4-carboxamide, 3-(difluoromethyl)-N-[4-fluoro-2-(1,1,2,3,3,3-hexafluoropropoxy)phenyl]-1-methyl-1H-pyrazole-4-carboxamide and pentyl {6-[({[(1-methyl-1H-tetrazol-5-yl)(phenyl)methylidene]amino}oxy)methyl]pyridin-2-yl}carbamate.

In the case that at least one further fungicide is used together with penflufen for increasing the plant growth and yield, the application quantity of this at least further fungicide is from 0.1 to 100 g active ingredient/100 kg of seed to be treated, more preferably from 0.5 to 75 g active ingredient/100 kg seed, most preferably of from 1 to 50 g active ingredient/100 kg seed.

In a composition of penflufen and another fungicide, the mixing ration of the active ingredients should not be limited, and it may vary over a relatively wide range depending on specific active compound to be mixed and the like.

The method of the present invention can be utilized to treat a wide variety of plants, especially when soybean seeds have been treated with penflufen an earlier emergence of the soybean plants have been observed in comparison to untreated plants. By plants is meant all plants and plant populations such as desirable and undesirable wild plants, cultivars and plant varieties. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. In conjunction with the present invention the terms "plants", "crops" and "crop plants" can be used interchangeably. Useful crop plants can include: rice, wheat, barley, oath, rye, triticale, cotton, sunflower, peanut, corn, potato, canola, oil-seed rape, sweet potato, bean, pea, chicory, lettuce, endive, cabbage, cauliflower, broccoli, turnip, radish, spinach, onion, garlic, eggplant, pepper, celery, carrot, squash, pumpkin, zucchini, cucumber, soybean, tobacco, tomato, sorghum, mustard, coffee and sugarcane. Examples of suitable ornamental plants are: rose, Saintpaulia, petunia, pelargonium, poinsettia, chrysanthemum, carnation, tulips and zinnia.

In particular, the method of the present invention can be utilized to treat soybeans.

The fact that penflufen is well tolerated by plants at the concentrations required for improving the plant growth permits a treatment of the seed. Accordingly, penflufen can be used as seed dressings. A detailed description of seed treatment applications of penflufen is disclosed in WO 2005/122770 from page 16, line 32 to page 21, line 17.

The method of treatment according to the invention can be used in the treatment of genetically modified organisms (GMOs), e.g. plants or seeds. Genetically modified plants (or transgenic plants) are plants of which a heterologous gene has been stably integrated into genome.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

In a preferred embodiment, the use according to the present invention is furthermore characterized in that the plant is treated in absence of pest pressure.

Furthermore, the present invention is related to a process for increasing the seedling growth and/or the early emergence of crops, characterized in that an organic compound of the formula (I) 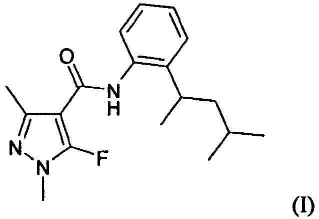 is applied to the seeds of the crop.

Specific embodiments of this process are described above.

The present invention is described in more detail with respect to the following examples:

### Examples

The test is performed in the greenhouse. 7 soybean seeds per treatment of 2 varieties (Cordoba and Isidor) were sown in 5 liter pots containing 13 cm of a mix of steamed field soil and sand (1:1), 2 replicates were made. The tested compound as well as the reference active ingredient were both solved in a standard solvent used for soybean seed application and known to be safe. Seed treatment was performed with the aid of laboratory equipment. For untreated, 4 replicates were made and seeds were treated with the pure solvent.

2 fungicide concentrations were tested: 5 g a.i./100 kg and 10 g a.i./100kg.

Seeds were then covered by 5 cm of the same mix of steamed field soil and sand (1:1). Pots were incubated in the greenhouse 15 days at 20°C and 80% relative humidity. Assessment consisted of calculation of green surface of soybean (pixel) using a digital imaging software to manage data analysis.

### Plant growth test - Soybean variety "Cordoba"

| **Compound** | **Dose rate (g a.i./100kg)** | **Green surface (pixel)** | **% of untreated** |
|---|---|---|---|
| untreated | 0 | 68518 | 100 |
| Penflufen | 5 | 109373 | 160 |
| Penflufen | 10 | 108284 | 158 |
| Boscalid | 5 | 74661 | 109 |
| Boscalid | 10 | 77243 | 113 |

### Plant growth test - Soybean variety "Isidor"

| **Compound** | **Dose rate (g a.i./100kg)** | **Green surface (pixel)** | **% of untreated** |
|---|---|---|---|
| untreated | 0 | 84154 | 100 |
| Penflufen | 5 | 105395 | 125 |
| Penflufen | 10 | 111543 | 133 |
| Boscalid | 5 | 71972 | 86 |
| Boscalid | 10 | 72634 | 86 |

## Claims

1. Use of a compound of the formula (I) 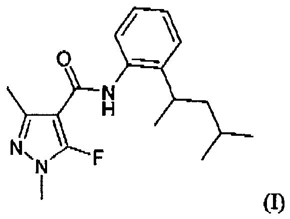 for increasing the seedling growth and/or the early emergence of crops.

2. The use according to claim 1, **characterized in that** at least on of (a) emergence time; (b) emergence rate or (c) growth of the seedling is improved.

3. The use according to claim 1 or 2, **characterized in that** the crop is a soybean crop.

4. The use according to any one of claims 1 to 3, **characterized in that** the compound of the formula (I) is used in combination with at least one further fungicide.

5. The use according to claim 4, **characterized in that** the further fungicide is selected from the group consisting of
(B1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid;
(B2) Inhibitors of the mitosis and cell division, for example benomyl, carbendazim, chlorfenazole, diethofencarb, ethaboxam, fuberidazole, pencycuron, thiabendazole, thiophanate, thiophanate-methyl and zoxamide;
(B3) Inhibitors of the respiration, for example diflumetorim as CI-respiration inhibitor; bixafen, boscalid, carboxin, fenfuram, flutolanil, fluopyram, furametpyr, furmecyclox, isopyrazam (mixture of syn-epimeric racemate 1RS,4SR,9RS and anti-epimeric racemate 1RS,4SR,9SR), isopyrazam (syn epimeric racemate 1RS,4SR,9RS), isopyrazam (syn-epimeric enantiomer 1R,4S,9R), isopyrazam (syn-epimeric enantiomer 1S,4R,98), isopyrazam (anti-epimeric racemate 1RS,4SR,9S), isopyrazam (anti-epimeric enantiomer 1R,4S,9S), isopyrazam (anti-epimeric enantiomer 1S,4R,9R), mepronil, oxycarboxin, penflufen, penthiopyrad, sedaxane, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyraoxystrobin, pyrametostrobin, pyribencarb, trifloxystrobin as CIII-respiration inhibitor;
(B4) Compounds capable to act as an uncoupler, like for example binapacryl, dinocap, fluazinam and meptyldinocap;
(B5) Inhibitors of the ATP production, for example fentin acetate, fentin chloride, fentin hydroxide, and silthiofam;
(B6) Inhibitors of the amino acid and/or protein biosynthesis, for example andoprim, blasticidin-S, cyprodinil, kasugamycin, kasugamycin hydrochloride hydrate, mepanipyrim and pyrimethanil;
(B7) Inhibitors of the signal transduction, for example fenpiclonil, fludioxonil and quinoxyfen;
(B8) Inhibitors of the lipid and membrane synthesis, for example biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl and vinclozolin;
(B9) Inhibitors of the ergosterol biosynthesis, for example aldimorph, azaconazole, bitertanol, bromuconazole, cyproconazole, diolobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipeonazole, meteonazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole;
(B10) Inhibitors of the cell wall synthesis, for example benthiavalicarb, dimethomorph, flumorph, iprovalicarb, mandipropamid, polyoxins, polyoxorim, prothiocarb, validamycin A, and valifenalate;
(B11) Inhibitors of the melanine biosynthesis, for example carpropamid, diclocymet, fenoxanil, phthalide, pyroquilon and tricyclazole;
(B12) Compounds capable to induce a host defence, like for example acibenzolar-S-methyl, probenazole, and tiadinil;
(B13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, motiram, metiram zinc, oxine-copper, propamidine, propineb, sulphur and sulphur preparations including calcium polysulphide, thiram, tolylfluanid, zineb and ziram;
(B14) Further compounds like for example 2,3-dibutyl-6-chlorothieno[2,3-d]pyrimidin 4(3H)-one, ethyl (2Z)-3-amino-2-cyano-3-phenylprop-2-enoate, N-[2-(1,3-dimethylbutyl)phenyl]-5-fluoro-1,3-dimethyl-1H-pyrazole-4-carboxamide, 3-(difluoromethyl)-1-methyl-N-(3',4',5'-trifluorobiphenyl-2-yl)-1H-pyrazole-4-carbaxamide, 3-(diffuoromethyl)-N-[4-fluoro-2-(1,1,2,3,3,3-hexafluoropropoxy)-phenyl]-1-methyl-1H-pyrazole-4-carboxamide, (2E)-2-{2-{[6-(3-chloro-2-methylphenoxy)5-fluoropyrimidin-4-yl]oxy} phenyl}2-(methoxyimino)-N-methylethanamide, (2E)-2-{2-[({[(2E,3E)-4-(2,6-dichlorophenyl)but-3-en-2-yliidene]amino}oxy)methyl]phenyl}-2-(methoxyimino)-N-methylethanamide, 2-chloro-N-(1,1,3-trimethyl-2,3-dihydro-1H-inden-4,yl)pyridine-3-carboxamnide, N-(3-ethyl-3,5,5-trimethylcyclohexyl)-3-(frmylamino)-2-hydroxybenzamide, 5-methoxy-2-methyl-4-(2-{[({(1E)-1-[3-(trifluoromethyl)phenyl]-ethylidene}amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}imino)methyl]phenyl}ethanamide, (2E)-2-{2-[({[(1E)-1-(3-{[(E)-1-fluoro-2-phenylethenyl]oxy}phenyl)-ethylidene]amino}oxy)methyl]phenyl}-2-(methoxyimino)-N-methylethanamide, 1-(4-chlorophonyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-(1-[(4-methoxyphonoxy)methyl]-2,2-dimethylpropyl) 1H-imidazole-1-carbothioate, N-[2-(4-{[3-(4-chlorophenyl)prop-2-yn-1-yl]oxy}-3-mothoxyphenyl)ethyl]-N-²-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoroethoxy)phenyl]-3-(trifluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethyl-isoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6,dimethylpyrid-azine, quinolin-8-al, quinolin-8-ol sulfate (2:1) (salt), tebufloquin, 5-methyl-6-octyl-3,7-dihydro[1,2,4]triazolo[1,5-a]pyrimidin-7-amine, 5-ethyl-6-octyl-3,7-di-hydro[1,2,4]triazolo[1,5-a]pyrimidin-7-amine, ametoctradin, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-chloro-2-methoxy-4-methylpyridin-3-yl)(2,3,4-trimethoxy-6-methylphonyl)methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]-propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-diohloropyridine-3-carboxamide, N-[1-(5-bromo-3-chloropyridin-2-yl)ethyl]-2-fluoro-4-iodopyridine-3-carboxamide, N-{(Z)-[(cyclopropylmethoxy)imino] [6-difluoromethoxy)-2,3-difluorophenyl]methyl)-2-phenylacetamide, N-{(E)-[(cyclopropylmethoxy)imino]-[6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-M-prop-2-yn-1-ylthiophene-2-sulfonohydrazide, zarilamid, N-methyl-2-(1-{[5-methyl-3-(trifluoromethyl)-1H-pylazol-1-yl]acetyl}piperidin-4-yl)-N-[(1R)-1,2,3,4-tetrahydro-naphthalen-1-yl]-1,3-thiazole-4-carboxamide, N-methyl-2-(1-{[5-methyl-3-(trifluoromethyl)-1H-pyrazol-1-yl]acetyl}piperidin-4-yl)-N-(1,2,3,4-tetrahydronaphthalen-1-yl)-1,3-thiazole-4-carboxamide, 3-(difluoromethyl)-N-[4-fluoro-2-(1,1,2,3,3,3-hexafluoropropoxy)phenyl]-1-methyl-1H-pyrazole-4-carboxamide and pentyl {6-[({[(1-methyl-1H-tetrazol-5-yl)(phenyl)methylidene]amino}oxy)methyl]pyridin-2-yl} carbamate,

6. The use according to any of claims 1 to 5, **characterized in that** the application quantity of the compound of formula (I) is from 0.1 to 1000 g active ingredient/1100 kg of seed.

7. The use according to any of claims 1 to 6, **characterized in that** the seed is treated in absence of pest pressure.

8. A process for increasing the seedling growth and or the early emergence of crops, **characterized in that** an organic compound ofthe formula (I) 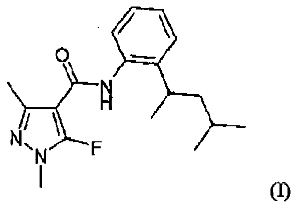 is applied to the seeds of the crop.

## Patentansprüche

1. Verwendung einer Verbindung der Formel (I) 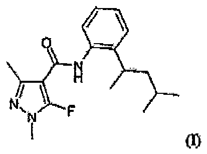 für erhöhtes Keimpflanzenwachstum und/oder frühes Auflaufen von Kulturen.

2. Verwendung nach Anspruch 1, **dadurch gekennzeichnet, dass** mindestens eines der Merkmale (a) Zeit des Auflaufens; (b) Auflaufrate oder (c) Wachstum der Keimpflanze verbessert ist.

3. Verwendung nach Anspruch 1 oder 2, **dadurch gekennzeichnet, dass** es sich bei der Kultur um eine Sojabohnenkultur handelt.

4. Verwendung nach einem der Ansprüche 1 bis 3, **dadurch gekennzeichnet, dass** die Verbindung der Formel (I) in Kombination mit mindestens einem weiteren Fungizid verwendet wird.

5. Verwendung nach Anspruch 4, **dadurch gekennzeichnet, dass** das weitere Fungizid aus der Gruppe bestehend aus dem Folgenden ausgewählt ist:
(B1) Inhibitoren der Nukleinsäuresynthese, zum Beispiel Benalaxyl, Benalaxyl-M, Bupirimat, Clozylacon, Dimethirlmol, Ethirimol, Furalaxyl, Hymexazol, Metalaxyl, Metalaxyl-M, Ofurace, Oxadixyl und Oxolinsäure;
(B2) Inhibitoren der Mitose und Zellteilung, zum Beispiel Benomyl, Carbendazim, Chlorfenazol, Diethofencarb, Ethaboxam, Fuberidazol, Pencycuron, Thiabendazol, Thiophanat, Thiophanat-methyl und Zoxamid;
(B3) Inhibitoren der Respiration, zum Beispiel Diflumetorim als CI-Respirationsinhibitor; Bixafen, Boscalid, Carboxin, Fenfuram, Flutolanil, Fluopyram, Furametpyr, Furmecyclox, Isopyrazam (Mischung aus dem syn-epimeren Racemat 1RS,4SR,9RS und dem anti-epimeren Racemat 1RS,4SR,9SR), Isopyrazam (syn-epimeres Racemat 1RS,4SR,9RS), Isopyrazam (syn-epimeres Enantiomer 1R,4S,9R), Isopyrazam (synepimeres Enantiomer 1S,4R,9S), Isopyrazam (anti-epimeres Racemat 1RS,4SR,9SR), Isopyrazam (anti-epimeres Enantiomer 1R,4S,9S), Isopyrazam (anti-epimeres Enantiomer 1S,4R,9R), Mepronil, Oxycarboxin, Penflufen, Penthiopyrad, Sedaxan, Thifluzamid als CII-Respirationsinhibitor; Amisulbrom, Azoxystrobin, Cyazofamid, Dimoxystrobin, Enestroburin, Famoxadon, Fenamidon, Fluoxastrobin, Kresoxim-methyl, Metominostrobin, Orysastrobin, Picoxystrobin, Pyraclostrobin, Pyraoxystrobin, Pyrametostrobin, Pyribencarb, Trifloxystrobin als CIII-Respirationsinhibitor;
(B4) Verbindungen, die als Entkoppler wirken können, wie zum Beispiel Binapacryl, Dinocap, Fluazinam und Meptyldinocap;
(B5) Inhibitoren der ATP-Produktion, zum Beispiel Fentinacetat, Fentinchlorid, Fentinhydroxid und Silthiofam;
(B6) Inhibitoren der Aminosäure- und/oder Proteinbiosynthese, zum Beispiel Andoprim, Blasticidin-S, Cyprodinil, Kasugamycin, Kasugamycin-hydrochlorid-hydrat, Mepanipyrim und Pyrimethanil;
(B7) Inhibitoren der Signalleitung, zum Beispiel Fenpiclonil, Fludioxonil und Quinoxyfen;
(B8) Inhibitoren der Lipid- und Membransynthese, zum Beispiel Biphenyl, Chlozolinat, Edifenphos, Etridiazol, Iodocarb, Iprobenfos, Iprodion, Isoprothiolan, Procymidon, Propamocarb, Propamocarb-hydrochlorid, Pyrazophos, Tolclofos-methyl und Vinclozolin;
(B9) Inhibitoren der Ergosterolbiosynthese, zum Beispiel Aldimorph, Azaconazol, Bitertanol, Bromuconazol, Cyproconazol, Diclobutrazol, Difenoconazol, Diniconazol, Diniconazol-M, Dodemorph, Dodemorph-acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-cis, Hexaconazol, Imazalil, Imazalil-sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Viniconazol und Voriconazol;
(B10) Inhibitoren der Zellwandsynthese, zum Beispiel Benthiavalicarb, Dimethomorph, Flumorph, Iprovalicarb, Mandipropamid, Polyoxine, Polyoxorim, Prothiocarb, Validamycin A und Valifenalat;
(B11) Inhibitoren der Melaninbiosynthese, zum Beispiel Carpropamid, Diclocymet, Fenoxanil, Phthalid, Pyroquilon und Tricyclazol;
(B12) Verbindungen, die eine Abwehrreaktion des Wirts induzieren können, wie zum Beispiel Acibenzolar-S-methyl, Probenazol und Tiadinil;
(B13)Verbindungen, die eine Multisite-Wirkung ausüben können, wie zum Beispiel Bordeaux-Brühe, Captafol, Captan, Chlorthalonil, Kupfernaphthenat, Kupferoxid, Kupferoxychlorid, Kupferpräparate wie Kupferhydroxid, Kupfersulfat, Dichlofluanid, Dithianon, Dodin, Dodin (freie Base), Ferbam, Fluorofolpet, Folpet, Guazatin, Guazatinacetat, Iminoctadin, Iminoctadin-albesilat, Iminoctadintriazetat, Mancopper, Mancozeb, Maneb, Metiram, Metiram-Zink, Oxin-Kupfer, Propamidin, Propineb, Schwefel und Schwefelpräparate, einschließlich Calciumpolysulfid, Thiram, Tolyfluanid, Zineb und Ziram;
(B14) Sonstige Verbindungen wie zum Beispiel 2,3-Dibutyl-6-chlorthieno[2,3-d]pyrimidin-4(3H)-on, Ethyl(2Z)-3-amino-2-cyano-3-phenylprop-2-enoat, N-[2-(1,3-Dimethylbutyl)phenyl]-5-fluor-1,3-dimethyl-1H-pyrazol-4-carboxamid, 3-(Difluormethyl)-1-methyl-N-(3',4',5'-trifluorbiphenyl-2-yl)-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, (2E)-2-(2-{[6-(3-Chlor-2-methylphenoxy)-5-fluorpyrimi-din-4-yl]oxy}phenyl)-2-(methoxyimino)-N-methylethanamid, (2E)-2-(2-[({[(2E,3E)-4-(2,6-Dichlorphenyl)but-3-en-2-yliden]amino}-oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, N-(3-ethyl-3,5,5-trimethylcyclohexyl)-3-(formylamino)-2-hydroxybenzamid, 5-Methoxy-2-methyl-4-(2-{[({(1E)-1-[3-(trifluormethyl)-phenyl]ethyliden}amino)oxy]methyl}phenyl)-2,4-dihydro-3H-1,2,4-triazol-3-on, (2E)-2-(Methoxyimino)-N-methyl-2-(2-{[({(1E)-1-[3-(trifluormethyl)phenyl]ethyliden}amino)-oxy]methyl}phenyl)ethanamid, (2E)-2-(Methoxy-imino)-N-methyl-2-{2-[(E)-({1-[3-(trifluormethyl)phenyl]ethoxy}imino)methyl]-phenyl}ethanamid, (2E)-2-{2-[({[(1E)-1-(3-{[(E)-1-Fluor-2-phenylethenyl]oxy}phenyl)-ethyliden]amino}oxy)methyl]phenyl}-2-(methoxyimino)-N-methylethanamid, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N-Ethyl-N-methyl-N'-{2-methyl-5-(trifluormethyl)-4-[3-(trimethylsilyl)-propoxy]phenyl}imidoformamid, N`-{5-(Difluor-methyl)-2-methyl-4-[3-(trimethylsilyl)-propoxy]phenyl}-N-ethyl-N-methylimido-formamid, O-{1-[(4-Methoxyphenoxy)methyl]-2,2-dimethylpropyl}-1H-imidazol-1-carbothioat, N-[2-(4-{[3-(4-Chlorphenyl)prop-2-in-1-yl]oxy}-3-methoxyphenyl)ethyl]-N²-(methylsulfonyl)valinamid, 5-Chlor-7-(4-methylpiperidin-1-yl)-6-(2,4,6-trifluor-phenyl)[1,2,4]triazol[1,5-a]pyrimidin, 5-Amino-1,3,4-thiadiazol-2-thiol, Propamocarbfosetyl, 1-[(4-Methoxyphenoxy)methyl]-2,2-dimethylpropyl-1H-imidazol-1-carboxylat, 1-Methyl-N-[2-(1,1,2,2-tetrafluorethoxy)-phenyl]-3-(trifluormethyl)-1H-pyrazol-4-carboxymid, 2,3,5,6-Tetrachlor-4-(methylsulfonyl)pyridin, 2-Butoxy-6-iod-3-propyl-4H-chromen-4-on, 2-Phenylphenol und Salze, 3-(Difluormethyl)-1-methyl-N-[2-(1,1,2,2-tetrafluorethoxy)phenyl]-1H-pyrazol-4-carboxamid, 3,4,5-Trichlorpyridin-2,6-dicarbonsäurenitril, 3-[5-(4-Chlorphenyl)-2,3-dimethylisoxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, Chinolin-8-ol, Chinolin-8-olsulfat (2:1) (Salz), Tebufloquin, 5-Methyl-6-octyl-3,7-dihydro[1,2,4]triazolo[1,5-a]pyrimidin-7-amin, 5-Ethyl-6-octyl-3,7-dihydro[1,2,4]triazolo[1,5-a]pyrimidin-7-amin, Ametoctradin, Benthiazol, Bethoxazin, Capsimycin, Carvon, Chinomethionat, Chlorneb, Cufraneb, Cyflufenamid, Cymoxanil, Cyprosulfamid, Dazomet, Debacarb, Dichlorophen, Diclomezin, Dicloran, Difenzoquat, Difenzoquat-methylsulfat, Diphenylamin, Ecomat, Ferimzon, Flumetover, Fluopicolid, Fluorimid, Flusulfamid, Flutianil, Fosetyl-Aluminium, Fosetyl-Calcium, Fosetyl-Natrium, Hexachlorbenzol, Irumamycin, Isotianil, Methasulfocarb, Methyl-(2E)-2-{2-[({cyclopropyl[(4-methoxyphenyl)imino]methyl}thio)methyl]phenyl }-3-methoxyacrylat, Methylisothiocyanat, Metrafenon, (5-Chlor-2-methoxy-4-methylpyridin-3-yl)(2,3,4-trimethoxy-6-methylphenyl)methanon, Mildiomycin, Tolnifanid, N-(4-Chlorbenzyl)-3-[3-methoxy-4-(prop-2-in-1-yloxy)phenyl]propanamid, N-[(4-Chlorphenyl)(cyano)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(Z)-[(Cyclopropylmethoxy(imino][6-(difluormethoxy)-2,3-difluorphenyl]methyl}-2-phenylacetamid, N-{(E)-[(Cyclopropylmethoxy(imino] [6-(difluormethoxy(-2,3-difluorphenyl]methyl}-2-phenylacetamid, Natamycin, Nickeldimethyl-dithiocarbamat, Nitrothal-isopropyl, Octhilinon, Oxamocarb, Oxyfenthiin, Pentachlorphenol und Salze, Phenazin-1-carbonsäure, Phenothrin, phosphorige Säure und ihre Salze, Propamocarb-fosetylat, Propanosin-Natrium, Proquinazid, Pyrrolnitrin, Quintozen, S-prop-2-en-1-yl-5-Amino-2-(1-methylethyl)-4-(2-methylphenyl)-3-oxo-2,3-dihydro-1H-pyrazol-1-carbothioat, Tecloftalam, Tecnazen, Triazoxid, Trichlamid, 5-Chlor-N`-phenyl-N`-prop-2-in-1-ylthiophen-2-sulfonhydrazid, Zarilamid, N-Methyl-2-(1-{[5-methyl-3-(trifluormethyl)-1H-pyrazol-1-yl]acetyl}piperidin-4-yl)-N-[(1R)-1,2,3,4-tetrahydronaphthalen-1-yl]-1,3-thiazol-4-carboxamid, N-Methyl-2-(1-{[-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, 3-(Difluormethyl)-N-[4-fluor-2-(1,1,2,3,3,3-hexafluorpropoxy)phenyl]-1-methyl-1H-pyrazol-4-carboxamid und Pentyl-{6-[({[(1-methyl-1H-tetrazol-5-yl)(phenyl)me-thyliden]amino}oxy)methyl]pyridin-2-yl}carbamat.

6. Verwendung nach einem der Ansprüche 1 bis 5, **dadurch gekennzeichnet, dass** die Aufwandmenge der Verbindung der Formel (I) 0,1 bis 1000 g Wirkstoff/100 kg Samen beträgt.

7. Verwendung nach einem der Ansprüche 1 bis 6, **dadurch gekennzeichnet, dass** der Samen in Abwesenheit von Schädlingsdruck behandelt wird.

8. Verfahren zum Erhöhen des Keimpflanzenwachstums und/oder des frühen Auflaufens von Kulturen, **dadurch gekennzeichnet, dass** man eine organische Verbindung der Formel (I) 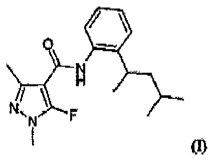 auf die Samen der Kultur ausbringt.

## Revendications

1. Utilisation d'un composé de formule (I) 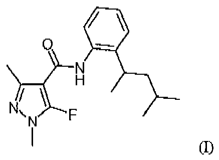 pour l'augmentation de la croissance des semis et/ou la levée précoce des cultures.

2. Utilisation selon la revendication 1, **caractérisée en ce que** l'on améliore au moins un parmi (a) le temps de levée ; (b) la vitesse de levée ou (c) la croissance des semis.

3. Utilisation selon la revendication 1 ou 2, **caractérisée en ce que** la culture est une culture de soja.

4. Utilisation selon l'une quelconque des revendications 1 à 3, **caractérisée en ce que** le composé de formule (I) est utilisé en combinaison avec au moins un autre fongicide.

5. Utilisation selon la revendication 4, **caractérisée en ce que** l'autre fongicide est choisi dans le groupe constitué par
(B1) les inhibiteurs de la synthèse des acides nucléiques, par exemple le bénalaxyle, le bénalaxyle-M, le bupirimate, le clozylacon, le diméthirimol, l'éthirimol, le furalaxyle, l'hymexazol, le métalaxyle, le métalaxyle-M, l'ofurace, l'oxadixyle et l'acide oxolinique ;
(B2) les inhibiteurs de la mitose et de la division cellulaire, par exemple le bénomyle, le carbendazime, le chlorfénazole, le diéthofencarb, l'éthaboxam, le fubéridazole, le pencycuron, le thiabendazole, le thiophanate, le thiophanate-méthyle et le zoxamide ;
(B3) les inhibiteurs de la respiration, par exemple le diflumétorime comme inhibiteur du complexe I de la chaîne respiratoire ; le bixafène, le boscalide, la carboxine, le fenfuram, le flutolanil, le fluopyram, le furametpyr, le furmécyclox, l'isopyrazam (mélange du racémate syn-épimère 1RS,4SR,9RS et du racémate anti-épimère 1RS,4SR,9SR), l'isopyrazam (racémate synépimère 1RS,4SR,9RS), l'isopyrazam (énantiomère synépimère 1R,9S,9R), l'isopyrazam (énantiomère synépimère 1S,4R,9S), l'isopyrazam (racémate anti-épimère 1RS,4SR,9SR), l'isopyrazam (énantiomère anti-épimère 1R,4S,9S), l'isopyrazam (énantiomère anti-épimère 1S,4R,9R), le mépronil, l'oxycarboxine, le penflufène, le penthiopyrad, le sédaxane, et le thifluzamide comme inhibiteurs du complexe II de la chaîne respiratoire ; ou l'amisulbrom, l'azoxystrobine, le cyazofamide, la dimoxystrobine, l'énestroburine, la famoxadone, la fénamidone, la fluoxastrobine, le krésoxime-méthyle, la métominostrobine, l'orysastrobine, la picoxystrobine, la pyraclostrobine, la pyraoxystrobine, la pyramètostrobine, le pyribencarb, et la trifloxystrobine comme inhibiteurs du complexe III de la chaîne respiratoire ;
(B4) les composés capables d'agir comme découpleurs, tels que par exemple le binapacryle, le dinocap, le fluazinam et le meptyldinocap ;
(B5) les inhibiteurs de la production d'ATP, par exemple l'acétate de fentine, le chlorure de fentine, l'hydroxyde de fentine, et le silthiofam ;
(B6) les inhibiteurs de la biosynthèse des acides aminés et/ou des protéines, par exemple l'andoprime, la blasticidine-S, le cyprodinil, la kasugamycine, le chlorhydrate de kasugamycine hydraté, le mépanipyrim et le pyriméthanil ;
(B7) les inhibiteurs de la transduction de signal, par exemple le fenpiclonil, le fludioxonil et le quinoxyfène ;
(B8) les inhibiteurs de la synthèse des lipides et des membranes, par exemple le biphényle, le chlozolinate, l'édifenphos, l'étridiazole, l'iodocarb, l'iprobenfos, l'iprodione, l'isoprothiolane, la procymidone, le propamocarb, le chlorhydrate de propamocarb, le pyrazophos, le tolclofos-méthyle et la vinclozoline ;
(B9) les inhibiteurs de la synthèse de l'ergostérol, par exemple l'aldimorph, l'azaconazole, le bitertanol, le bromuconazole, le cyproconazole, le diclobutrazole, le difénoconazole, le diniconazole, le diniconazole-M, le dodémorph, l'acétate de dodémorph, l'époxiconazole, l'étaconazole, le fénarimol, le fenbuconazole, le fenhexamid, la fenpropidine, le fenpropimorph, le fluquinconazole, le flurprimidol, le flusilazole, le flutriafol, le furconazole, le furconazole-cis, l'hexaconazole, l'imazalil, le sulfate d'imazalil, l'imibenconazole, l'ipconazole, le metconazole, le myclobutanile, la naftifine, le nuarimol, l'oxpoconazole, le paclobutrazol, le péfurazoate, le penconazole, la pipéraline, le prochloraz, le propiconazole, le prothioconazole, le pyributicarb, le pyrifénox, le quinconazole, le siméconazole, la spiroxamine, le tébuconazole, la terbinafine, le tétraconazole, le triadiméfon, le triadiménol, le tridémorph, le triflumizole, la triforine, le triticonazole, l'uniconazole, le viniconazole et le voriconazole ;
(B10) les inhibiteurs de la synthèse des parois cellulaires, par exemple le benthiavalicarb, le diméthomorph, le flumorph, l'iprovalicarb, le mandipropamide, la polyoxine, le polyoxorim, le prothiocarb, la validamycine A, et le valifénalate ;
(B11) les inhibiteurs de la biosynthèse de la mélanine, par exemple le carpropamide, le diclocymet, le fénoxanil, le phtalide, le pyroquilon et le tricyclazole ;
(B12) les composés capables d'induire une défense de l'hôte, tels que par exemple l'acibenzolar-S-méthyle, le probénazole, et le tiadinil ;
(B13) les composés capables d'avoir une action au niveau de sites multiples, tels que par exemple la bouillie bordelaise, le captafol, le captan, le chlorothalonil, le naphténate de cuivre, l'oxyde de cuivre, l'oxychlorure de cuivre, les préparations de cuivre telles que l'hydroxyde de cuivre et le sulfate de cuivre, le dichlofluanid, le dithianon, la dodine, la base libre de dodine, le ferbam, le fluorofolpet, le folpet, la guazatine, l'acétate de guazatine, l'iminoctadine, l'albésilate d'iminoctadine, le triacétate d'iminoctadine, le mancopper, le mancozeb, le maneb, le métiram, le métiram zinc, l'oxine-cuivre, la propamidine, le propineb, le soufre et les préparations de soufre y compris le polysulfure de calcium, le thiram, le tolylfluanide, le zineb et le ziram ;
(B14) d'autres composés, tels que par exemple la 2,3-dibutyl-5-chlorothiéno[2,3-d]pyrimidin-4(3H)-one, le (2Z)-3-amino-2-cyano-3-phénylprop-2-énoate d'éthyle, le N-[2-(1,3-diméthylbutyl)phényl]-5-fluoro-1,3-diméthyl-1H-pyrazole-4-carboxamide, le 3-(difluorométhyl)-1-méthyl-N-(3',4',5'-trifluorobiphényl-2-yl)-1H-pyrazole-4-carboxamide, le 3-(difluorométhyl)-N-[4-fluoro-2-(1,1,2,3,3,3-hexafluoropropoxy)phényl]-1-méthyl-1H-pyrazole-4-carboxamide, le (2E)-2-(2-{[6-(3-chloro-2-méthylphénoxy)-5-fluoropyrimidin-4-yl]oxy}phényl)-2-(méthoxyimino)-N-méthyléthanamide, le (2E)-2-(2-[({[(2E,3E)-4-(2,6-dichlorophényl)but-3-én-2-ylidène]-amino}oxy)méthyl]phényl}-2-(méthoxyimino)-N-méthyl-éthanamide, le 2-chloro-N-(1,1,3-triméthyl-2,3-dihydro-1H-indén-4-yl)pyridine-3-carboxamide, le N-(3-éthyl-3,5,5-triméthylcyclohexyl)-3-(formylamino)-2-hydroxy-benzamide, la 5-méthoxy-2-méthyl-4-(2-{[({(1E)-1-[3-(trifluorométhyl)phényl]éthylidène}amino)oxy]méthyl}-phényl)-2,4-dihydro-3H-1,2,4-triazol-3-one, le (2E)-2-(méthoxyimino)-N-méthyl-2-(2-{[({(1E)-1-[3-(trifluoro-méthyl)phényl]éthylidène}amino)oxy]méthyl]phényl)éthana mide, le (2E)-2-(méthoxyimino)-N-méthyl-2-{2-[(E)-({1-[3-(trifluorométhyl)phényl]éthoxy}imino)méthyl]phényl}-éthanamide, le (2E)-2-{2-[({[(1E)-1-(3-{[(E)-1-fluoro-2-phényléthényl]oxy}phényl)éthylidène]amino}oxy)-méthyl]phényl}-2-(méthoxyimino)-N-méthyléthanamide, le 1-(4-chlorophényl)-2-(1H-1,2,4-triazol-1-yl)-cycloheptanol, le 1-(2,2-diméthyl-2,3-dihydro-1H-indén-1-yl)-1H-imidazole-5-carboxylate de méthyle, le N-éthyl-N-méthyl-N'-{2-méthyl-5-(trifluorométhyl)-4-[3-(triméthylsilyl)propoxy]phényl}imidoformamide, le N'-{5-(difluorométhyl)-2-méthyl-4-[3-(triméthylsilyl)-propoxy]phényl}-N-éthyl-N-méthylimidoformamide, le 1H-imidazole-1-carbothioate de O-{1-[(4-méthoxyphénoxy)-méthyl]-2,2-diméthylpropyl}, le N-[2-(4-{[3-(4-chlorophényl)prop-2-yn-1-yl]oxy}-3-méthoxyphényl)-éthyl]-N²-(méthylsulfonyl)valinamide, la 5-chloro-7-(4-méthylpipéridin-1-yl)-6-(2,4,6-trifluorophényl)[1,2,4]-triazolo[1,5-a]pyrimidine, le 5-amino-1,3,4-thiadiazole-2-thiol, le propamocarb-fosétyl, le 1H-imidazole-1-carboxylate de 1-[(4-méthoxyphénoxy)-méthyl]-2,2-diméthylpropyle, le 1-méthyl-N-[2-(1,1,2,2-tétrafluoroéthoxy)phényl]-3-(trifluorométhyl)-1H-pyrazole-4-carboxamide, la 2,3,5,6-tétrachloro-4-(méthylsulfonyl)pyridine, la 2-butoxy-6-iodo-3-propyl-4H-chromén-4-one, le 2-phénylphénol et ses sels, le 3-(difluorométhyl)-1-méthyl-N-[2-(1,1,2,2-tétrafluoro-éthoxy)phényl]-1H-pyrazole-4-carboxamide, le 3,4,5-trichloropyridine-2,6-dicarbonitrile, la 3-[5-(4-chlorophényl)-2,3-diméthylisoxazolidin-3-yl]pyridine, la 3-chloro-5-(4-chlorophényl)-4-(2,6-difluorophényl)-6-méthylpyridazine, la 4-(4-chlorophényl)-5-(2,6-difluorophényl)-3,6-diméthylpyridazine, le quinoléin-8-ol, le sulfate de quinoléin-8-ol (2:1) (sel), la tébufloquine, la 5-méthyl-6-octyl-3,7-dihydro[1,2,4]-triazolo[1,5-a]pyrimidin-7-amine, la 5-éthyl-6-octyl-3,7-dihydro[1,2,4]triazolo[1,5-a]pyrimidin-7-amine, l'amétoctradine, le benthiazole, la béthoxazine, la capsimycine, la carvone, le chinométhionat, le chloroneb, le cufraneb, le cyflufénamide, le cymoxanil, le cyprosulfamide, le dazomet, le débacarb, le dichlorophène, la diclomézine, le dicloran, le difenzoquat, le méthylsulfate de difenzoquat, la diphénylamine, l'écomate, la férimzone, le flumétover, le fluopicolide, le fluoroimide, le flusulfamide, le flutianil, le fosétyl-aluminium, le fosétyl-calcium, le fosétyl-sodium, l'hexachlorobenzène, l'irumamycine, l'isotianil, le méthasulfocarb, le (2E)-2-{2-[({cyclopropyl[(4-méthoxyphényl)imino]méthyl}thio)-méthyl]phényl}-3-méthoxyacrylate de méthyle, l'isothiocyanate de méthyle, la métrafénone, la (5-chloro-2-méthoxy-4-méthylpyridin-3-yl)(2,3,4-triméthoxy-6-méthylphényl)méthanone, la mildiomycine, le tolnifanide, le N-(4-chlorobenzyl)-3-[3-méthoxy-4-(prop-2-yn-1-yloxy)phényl]propanamide, le N-[(4-chlorophényl)(cyano)méthyl]-3-[3-méthoxy-4-(prop-2-yn-1-yloxy)phényl]propanamide, le N-[(5-bromo-3-chloropyridin-2-yl)méthyl]-2,4-dichloropyridine-3-carboxamide, le N-[1-(5-bromo-3-chloropyridin-2-yl)éthyl]-2,4-dichloropyridine-3-carboxamide, le N-[1-(5-bromo-3-chloropyridin-2-yl)éthyl]-2-fluoro-4-iodopyridine-3-carboxamide, le N-{(Z)-[(cyclopropyl-méthoxy)imino][6-(difluorométhoxy)-2,3-difluorophényl]-méthyl}-2-phénylacétamide, le N-{(E)-[(cyclopropyl-méthoxy)imino][6-(difluorométhoxy)-2,3-difluoro-phényl]méthyl}-2-phénylacétamide, la natamycine, le diméthyldithiocarbamate de nickel, le nitrothal-isopropyle, l'octhilinone, l'oxamocarb, l'oxyfenthiin, le pentachlorophénol et ses sels, l'acide phénazine-1-carboxylique, la phénothrine, l'acide phosphoreux et ses sels, le fosétylate de propamocarb, la propanosine-sodium, le proquinazid, la pyrrolnitrine, le quintozène, le 5-amino-2-(1-méthyléthyl)-4-(2-méthyl-phényl)-3-oxo-2,3-dihydro-1H-pyrazole-1-carbothioate de S-prop-2-én-1-yle, le tecloftalam, le tecnazène, le triazoxide, le trichlamide, le 5-chloro-N'-phényl-N'-prop-2-yn-1-ylthiophéne-2-sulfonohydrazide, le zarilamide, le N-méthyl-2-(1-{[5-méthyl-3-(trifluorométhyl)-1H-pyrazol-1-yl]acétyl}pipéridin-4-yl)-N-[(1R)-1,2,3,4-tétrahydronaphtalén-1-yl]-1,3-thiazole-4-carboxamide, le N-méthyl-2-(1-([5-méthyl-3-(trifluorométhyl)-1H-pyrazol-1-yl]acétyl}pipéridin-4-yl)-N-(1,2,3,4-tétrahydronaphtalén-1-yl)-1,3-thiazole-4-carboxamide, le 3-(difluorométhyl)-N-[4-fluoro-2-(1,1,2,3,3,3-hexafluoropropoxy)phényl]-1-méthyl-1H-pyrazole-4-carboxamide et le {6-[({[(1-méthyl-1H-tétrazol-5-yl(phényl)méthylidéne]amino}oxy)méthyl]-pyridin-2-yl}carbamate de pentyle.

6. Utilisation selon l'une quelconque des revendications 1 à 5, **caractérisée en ce que** la quantité d'application du composé de formule (I) va de 0,1 à 1000 g d'ingrédient actif/100 kg de semences.

7. Utilisation selon l'une quelconque des revendications 1 à 6, **caractérisée en ce que** les semences sont traitées en absence de pression des nuisibles.

8. Procédé d'augmentation de la croissance des semis et/ou de la levée précoce des cultures, **caractérisé en ce qu'**un composé organique de formule (I) 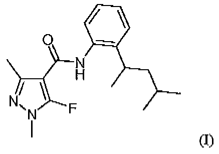 est appliqué aux semences de la culture.
